(19) Europäisches Patentamt
European Patent Office
Office européen des brevets

(11) EP 0 627 140 B1

(12) # EUROPÄISCHE PATENTSCHRIFT

(45) Veröffentlichungstag und Bekanntmachung des Hinweises auf die Patenterteilung:
**17.07.1996 Patentblatt 1996/29**

(21) Anmeldenummer: **93903155.5**

(22) Anmeldetag: **03.02.1993**

(51) Int Cl.[6]: **H04L 1/24**

(86) Internationale Anmeldenummer:
**PCT/DE93/00108**

(87) Internationale Veröffentlichungsnummer:
**WO 93/17511 (02.09.1993 Gazette 1993/21)**

(54) **DATENÜBERTRAGUNGSSTRECKENUNTERSUCHUNG DURCH BITFEHLERANZAHLWERTUNG MITTELS DUALER KREUZKORRELATION**

TESTING OF A DATA-TRANSMISSION LINE USING DUAL CROSS-CORRELATION TO ASSESS THE NUMBER OF DEFECTIVE BITS

CONTROLE D'UNE LIGNE DE TRANSMISSION DE DONNEES PAR L'EVALUATION DU NOMBRE D'ERREURS SUR LES BITS A L'AIDE DE LA CORRELATION CROISEE DOUBLE

(84) Benannte Vertragsstaaten:
**AT BE CH DE DK ES FR GB GR IT LI LU NL SE**

(30) Priorität: **21.02.1992 DE 4205776**

(43) Veröffentlichungstag der Anmeldung:
**07.12.1994 Patentblatt 1994/49**

(73) Patentinhaber: **SIEMENS AKTIENGESELLSCHAFT**
**80333 München (DE)**

(72) Erfinder: **WOLF, Andreas, Dr. Ing**
**D-12157 Berlin (DE)**

(56) Entgegenhaltungen:
- **NTZ Bd. 44, Nr. 8, 1991, BERLIN,DE; Seiten 548 - 557 WOLF ET AL 'BITFEHLER-STRUKTURANALYSE IN DER BREITBAND-ISDN-MESSTECHNIK'**
- **TELCOM REPORT Bd. 14, Nr. 2, 1991, Seiten 104 - 107 WOLF 'MESSPRÄZISION AUF BREITEM BAND'**
- **TELCOM REPORT Bd. 10, 1987, ERLANGEN,DE; Seiten 166 - 172 SEIDEL 'DER ISDN-BASISANSCHLUSS'**
- **INTERNATIONAL JOURNAL OF ELECTRONICS Bd. 50, Nr. 6, 1981, LONDON,GB; Seiten 429 - 436 EL-KHAMY 'ON GENERATION AND MEASUREMENT OF COMBINED BARKER CODES'**
- **INTERNATIONAL JOURNAL OF ELECTRONICS Bd. 64, Nr. 3, 1988, LONDON,DE; Seiten 481 - 492 EL-KHANY 'ON THE GENERATION AND CORRELATION MEASUREMENT OF GOLD CODES'**
- **IEEE MILITARY COMMUNICATIONS CONFERENCE Bd. 2, 1987, WASHINGTON,US; Seiten 738 - 741 KUMAR ET AL 'ON THE PARTIAL-PERIOD CORRELATION MOMENTS OF GMW SEQUENCES'**

EP 0 627 140 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Ermitteln der Anzahl fehlerhaft über eine zu untersuchende Daten-Übertragungsstrecke übertragener digitaler Daten (Bitfehleranzahl), bei dem streckeneingangsseitig eine aus digitalen Daten (Bits) bestehende Testsequenz gesendet wird, bei dem eine daraufhin streckenausgangsseitig empfangene Ausgangssequenz mit einem der Testsequenz oder der invertierten Testsequenz entsprechenden Referenzsequenz kreuzkorreliert wird und bei dem durch Auswertung des Extremwertes der so gebildeten Kreuzkorrelationsfunktion die Bitfehleranzahl bestimmt wird.

Bei einem derartigen bekannten (DE-A1-40 12 850) Verfahren wird streckeneingangsseitig eine aus einer Folge digitaler Daten gebildete Testsequenz gesendet. Als Testsequenz werden vorzugsweise digitale Daten verwendet, deren Autokorrelationsfunktion einen ausgeprägten Extremwert, z. B. in Form eines Dirac-Impulses (zur Definition des Dirac-Impulses vgl. Otto Mildenberger "Grundlagen der Systemtheorie für Nachrichtentechniker", Hansa-Verlag, 1981, Seiten 48 - 50), aufweist. Bei dem bekannten Verfahren wird aufgrund der gesendeten Testsequenz streckenausgangsseitig eine Ausgangssequenz empfangen. Zur Bildung einer Kreuzkorrelationsfunktion wird die Ausgangssequenz zyklisch bitweise über ihre Länge mit einer der Testsequenz oder der invertierten Testsequenz entsprechenden Referenzsequenz kreuzkorreliert. Unter invertierter Testsequenz ist eine Sequenz zu verstehen, die in bezug auf die Testsequenz aus jeweils den komplementären digitalen Daten besteht.

Der Extremwert, d. h. das Maximum oder Minimum, der Kreuzkorrelationsfunktion wird hinsichtlich der Höhe zur Bestimmung der Anzahl fehlerhaft übertragener Daten (Bitfehleranzahl) ausgewertet. Es besteht nämlich grundsätzlich in einem verhältnismäßig weiten Bereich ein umgekehrter Zusammenhang zwischen der absoluten Höhe des Extremwertes und der Bitfehleranzahl.

Bei dem bekannten Verfahren muß zur Angabe der Bitfehleranzahl der Extremwert weiteren Rechenoperationen in Form einer Subtraktion und einer Division unterzogen werden. Bildet man nämlich beispielsweise ausgehend von einer binären Zahlenfolge in Form einer $2^5$-m-Sequenz

$$C_O(n) = 0000100101100111110001101110101 \qquad \text{(G1-1)}$$

mit einer Periode von N=31 als Testsequenz und Referenzsequenz nach deren Umsetzung - durch Zuordnung der binären Werte 0 und 1 zu den bipolaren Werten -1 und +1 - in eine bipolare Zahlenfolge der Form

$$C_{obi}(n) = (-1)(-1)(-1)(-1)(+1)(-1)(-1)(+1)(-1)(+1)(+1)(-1)$$

$$(-1)(+1)(+1)(+1)(+1)(+1)(-1)(-1)(-1)(+1)(+1)(-1)$$

$$(+1)(+1)(+1)(-1)(+1)(-1)(+1) \qquad \text{(G1-2)}$$

mit einer z. B. in einer Stelle (Bit) verfälschten Ausgangssequenz $h_{bi}$ die Kreuzkorrelationsfunktion (KKF(n)) nach der Vorschrift

$$KKF(n) = \sum_{m=0}^{30} C_{obi}(m) \cdot h_{bi}(n+m) \qquad \text{(G1-3)}$$

ergibt sich ein Extremwert $KKF_{Ext}$ = 29. Um daraus die Bitfehleranzahl BF anzugeben, bedarf es der Rechenoperationen

$$BF = (N-KKF_{Ext})/2 = (31-29)/2 = 1 \qquad \text{(G1=4)}$$

Diese zur Angabe der Bitfehleranzahl notwendigen Rechenoperationen erfordern einen erheblichen schaltungstechnischen Aufwand, da sie nicht durch einfache Gatterschaltungen realisierbar sind. Die notwendigen Rechenoperationen wirken sich auf die Ausführungsgeschwindigkeit des bekannten Verfahrens vermindernd aus.

Der Erfindung liegt die Aufgabe zugrunde, ein Verfahren zum Ermitteln der Anzahl fehlerhaft über eine zu untersuchende Daten-Übertragungsstrecke übertragener digitaler Daten zu schaffen, das sich durch eine hohe Verfahrensgeschwindigkeit und eine einfache Angabemöglichkeit der ermittelten Bitfehleranzahl auszeichnet.

Erfindungsgemäß wird diese Aufgabe dadurch gelöst, daß die Ausgangssequenz mit der Referenzsequenz durch jeweilige Exklusiv-Oder-Verknüpfung mit anschließender Quersummenbildung unter Bildung einer dualen Kreuzkorrelationsfunktion gemäß der Vorschrift:

$$KKF_d(n) = \sum_{m=0}^{N-1} f(m) \oplus h(n+m)$$

wobei

$0 \leq n \leq N\text{-}1$

mit: ✦ : Exklusiv-Oder-Verknüpfung
f(m): Referenzsequenz R; $\bar{R}$
h(n+m): Ausgangssequenz AS
N: Anzahl der Bits in der Testsequenz A
n: Anzahl der Bitstellen, um die die Ausgangssequenz relativ zur ursprünglichen Ausgangssequenz verschoben ist.

kreuzkorreliert wird und daß die Bitfehleranzahl unmittelbar durch Angabe der niederwertigen Stellen des Extremwertes der dualen Kreuzkorrelationsfunktion angegeben wird.

Aus der DE-A1-40 14 767 ist es für sich bekannt, zum Gewinnen eines allgemeinen elektrischen Signals zwei binäre, unipolare Datenströme zunächst jeweils in ein Register einzulesen und die Daten in jeweils einander zugeordneten Speicherstellen der beiden Register durch eine Exklusiv-Oder-Funktion miteinander zu verknüpfen. Die sich aus den jeweiligen Verknüpfungen gleichzeitig ergebenden Zwischendaten werden unter Bildung eines der dualen Kreuzkorrelationsfunktion zwischen den beiden eingehenden binären Datenströmen entsprechenden elektrischen Signals summiert. Die dazu verwendete Summiereinrichtung kann aus einem kaskadenartigen Aufbau von mehreren Addierern bestehen.

Ein wesentlicher Vorteil des erfindungsgemäßen Verfahrens besteht darin, daß durch die Verwendung der dualen Korrelationsfunktion prinzipiell eine Subtraktion des Extremwertes und eine Division zur Angabe der Bitfehleranzahl entfällt. Die duale Kreuzkorrelationsfunktion weist einen positiven Wertebereich auf, der - ggf. nach Invertierung des Extremwertes - eine unmittelbare Bitfehler-Angabe über die niederwertigen Stellen des Extremwertes erlaubt. Das erfindungsgemäße Verfahren zeichnet sich durch eine schnelle Angabe der Bitfehleranzahl aus, die seinen Einsatz bei Messungen in Echtzeit erlaubt. Die Anzahl der noch zu einer zuverlässigen Anzeige der Bitfehleranzahl heranziehbaren niederwertigen Stellen des Extremwertes bestimmt sich grundsätzlich nach der Bitfehleranzahl, bei der die duale Kreuzkorrelationsfunktion noch einen sicher erkennbaren Extremwert aufweist (Fehlertoleranz). Die Fehlertoleranz ist testsequenzindividuell und erreicht bei Testsequenzen mit einem ausgeprägten Autokorrelationsfunktions-Extremwert vergleichsweise hohe Werte, wobei ein wesentlicher Vorteil darin besteht, daß die Fehlerverteilung innerhalb der Ausgangssequenz ohne Bedeutung ist. Vorzugsweise werden testsequenzspezifische Schwellwerte vorgesehen, so daß ein oberhalb des Schwellwertes liegender Wert der dualen Kreuzkorrelationsfunktion zuverlässig als Extremwert erkannt werden kann.

Eine hinsichtlich der Erkennbarkeit von Störungen bei der Verarbeitung der Ausgangssequenz, z. B. Ausfall eines die Referenzsequenz enthaltenden Speichers, vorteilhafte Ausgestaltung des erfindungsgemäßen Verfahrens besteht darin, daß die Exklusiv-Oder-Verknüpfung bei der Bildung der dualen Kreuzkorrelationsfunktion invers als Exklusiv-Nicht-Oder-Verknüpfung ausgeführt wird und daß bei Verwendung der Testsequenz als Referenzsequenz die niederwertigen Stellen des invertierten Extremwertes zur Angabe der Bitfehleranzahl benutzt werden, während bei Verwendung der invertierten Testsequenz als Referenzsequenz die niederwertigen Stellen des Extremwertes zur direkten Angabe der Bitfehleranzahl benutzt werden. Besonders vorteilhaft ist hierbei die Verwendung der invertierten Testsequenz als Referenzsequenz, die ohne Invertierung des Extremwertes eine direkte Ausnutzung der niederwertigen Stellen erlaubt.

Wie nachfolgend noch ausführlich erläutert wird, richtet sich eine vor der Angabe der Bitfehleranzahl ggf. vorzunehmende Invertierung zumindest der niederwertigen Stellen des Extremwertes nach der Beziehung zwischen Testsequenz und Referenzsequenz hinsichtlich Gleichheit oder Invertierung und nach der gewählten Verknüpfung (Exklusiv-Oder- oder Exklusiv-Nicht-Oder- Verknüpfung).

Eine vorteilhafte Weiterbildung des erfindungsgemäßen Verfahrens sieht vor, daß als Testsequenz eine $2^n$-m-Sequenz (vgl. Beschreibung in "Halbleiterschaltungstechnik", Tietze/Schenk, 1980, S. 509 - 512), ein Barker-Code (vgl. Beschreibung in "Pulstechnik", Hölzer/Holzwarth, 1982, S. 170 - 174), eine Gordon-Mills-Welch-Sequenz (vgl. "Sequences", Scholz/Welch, 1984, IEEE, Vo. IT-30, Nr. 3, Mai 1984, S. 548 - 553) oder ein Gold-Code (vgl. "Binary Sequence with a High Crosscorrelation with each Member of a Subset of Gold Codes" Yates, Electronics Letters, 28.08.1986, Vol. 22, Nr. 18, S. 930 bis 932) verwendet wird. Die Verwendung derartiger spezieller Zufallszahlenfolgen als Testsequenzen ist besonders vorteilhaft, weil die Autokorrelationsfunktion dieser Testsequenzen äußerst ausgeprägte Extremwerte annähernd in Form eines Dirac-Impulses aufweisen. Damit bildet die duale Kreuzkorrelationsfunktion ein weitestgehend fehlertolerantes Codierverfahren, d. h. eine größtmögliche Bitfehleranzahl bei zuverlässig erkennbarem Extremwert der Kreuzkorrelationsfunktion. Durch Verwendung langer Sequenzen läßt sich die Fehlertoleranz erheblich steigern.

Eine vorteilhafte Fortbildung des erfindungsgemäßen Verfahrens besteht darin, daß streckeneingangsseitig neben der Testsequenz zusätzlich eine Invers-Testsequenz gesendet wird, die durch Invertierung der Testsequenz gebildet

wird, und daß zusätzlich auch die relative Art des Extremwertes der dualen Kreuzkorrelationsfunktion ausgewertet wird. Unter relativer Art ist die relative Lage des Extremwertes in bezug auf den übrigen Funktionsverlauf zu verstehen; ein Extremwert, der unterhalb der übrigen Funktionswerte liegt, wird nachfolgend auch als unterer Extremwert oder Minimum bezeichnet. Ein Extremwert, der oberhalb der übrigen Funktionswerte liegt, wird analog nachfolgend als oberer Extremwert oder Maximum bezeichnet. Durch die zusätzliche Verwendung der Invers-Testsequenz wird die zu Untersuchungszwecken zur Verfügung stehende Anzahl von Testsequenzen (Code-Wörtern) verdoppelt. Bei dieser außerdem hinsichtlich der Zuverlässigkeit der Extremwerterkennung bei geringem schaltungstechnischen Aufwand vorteilhaften Fortbildung des erfindungsgemäßen Verfahrens kann z. B. bei Anwendung der Exklusiv-Nicht-Oder-Verknüpfung zur Bildung der dualen Kreuzkorrelationsfunktion und der Testsequenz als Referenzsequenz bei einem negativen Extremwert (Minimum) über dessen niederwertige Stellen die Bitfehleranzahl direkt angegeben werden, während bei einem positiven Extremwert (Maximum) die Bitfehleranzahl über dessen invertierte niederwertige Stellen angegeben wird.

Eine Vorrichtung zur Durchführung des erfindungsgemäßen Verfahrens mit einem Sender zur Ausgabe einer Testsequenz aus digitalen Daten oder einer durch Invertierung der digitalen Daten gebildete Invers-Testsequenz in eine zu untersuchende Datenübertragungsstrecke, mit einem Empfänger zum streckenausgangsseitigen Empfang einer Ausgangssequenz und mit einem Korrelator, der zur Bildung einer Kreuzkorrelationsfunktion eingangsseitig mit der Ausgangssequenz und mit einer Referenzsequenz beaufschlagt ist, ist erfindungsgmäß so ausgestaltet, daß der Korrelator eine Exklusiv-Oder- oder eine Exklusiv-Nicht-Oder-Verknüpfungsschaltung enthält, der ein Summierer zur Quersummenbildung nachgeordnet ist, daß ein Vergleicher die Quersumme mit einem oberen und einem unteren Schwellwert vergleicht, wobei die Schwellwerte in vorgegebenen Abständen zu testsequenztypischen Wertebereichsgrenzen eingestellt sind, und daß eine Auswahlschaltung in Abhängigkeit einer festgestellten Schwellwertüberschreitung zumindest die niederwertigen Stellen der zugeführten Quersumme einer Weiterverarbeitungseinrichtung oder einer Anzeige zuführt. Die erfindungsgemäße Vorrichtung zeichnet sich durch einen äußerst geringen Bedarf an Schaltungskomponenten aus, um die ermittelte Bitfehleranzahl in einfacher Weise unmittelbar darstellen zu können. Die erfindungsgemäße Vorrichtung ist äußerst robust und störungsunanfällig, da die Auswertung der empfangenen Ausgangssequenzen ohne Rechnereinheit lediglich durch preisgünstige und zuverlässig arbeitende logische Gatterschaltungen erfolgen kann.

Die Erfindung wird nachfolgend anhand einer Zeichnung näher erläutert; es zeigen

Figur 1 schematisch den Ablauf des erfindungsgemäßen Verfahrens,
Figur 2 eine Vorrichtung zur Durchführung des erfindungsgemäßen Verfahrens,
Figur 3 den Zusammenhang zwischen dem Extremwert einer dualen Kreuzkorrelationsfunktion und einer gewählten Testsequenz, einer Referenzsequenz und einer Verknüpfung und
Figur 4 eine Darstellung der nach dem erfindungsgemäßen Verfahren unmittelbar erhaltenen Angabe einer Bitfehleranzahl.

Das erfindungsgemäße Verfahren wird nachfolgend unter Verwendung einer Testsequenz A beschrieben, die aus einer Sequenz unipolarer, digitaler Daten (binäre Zahlenfolge) in Form einer $2^5$-m-Sequenz gemäß Gleichung (G1-1) besteht. Die Testsequenz wird beispielsweise einem digitalen Speicher entnommen oder aus einem rückgekoppelten Schieberegister generiert und dann in eine zu untersuchende Daten-Übertragungsstrecke DS eingangsseitig eingekoppelt. Eine infolge dieser Einkopplung streckenausgangsseitig empfangene Ausgangssequenz AS wird anschließend gemäß der Vorschrift

$$KKF_d(n) = \sum_{m=0}^{30} f(m) \,✦\, h(n+m), \qquad (GL-5)$$

wobei

$0 \leq n \leq 30$

und ✦ : Exklusiv-Nicht-Oder-Funktion oder Exklusiv-Oder-Verknüpfung
f(m): Referenzsequenz R ($2^5$-m-Sequenz)
h(n+m): Ausgangssequenz AS mit der Periode (Anzahl der

Bits in der Testsequenz) N=30 bedeuten, mit einer bereitgestellten Referenzsequenz R unter Bildung einer dualen Kreuzkorrelationsfunktion $KKF_d(n)$ korreliert. Die Korrelation erfolgt unter Verwendung einer Exklusiv-Nicht-Oder-Verknüpfung EXNOR oder einer Exklusiv-Oder-Verknüpfung EXOR. Die Referenzsequenz R entspricht der Testsequenz, also der $2^5$-m-Sequenz gemäß (Gl-l). Die Referenzsequenz R kann aber auch zu dieser invertiert sein, so daß sich eine Referenzsequenz

$$\overline{R} = \overline{A} = (1111011010011000001110010001010) \qquad (G1\text{-}6)$$

ergibt.

Nachfolgend sei angenommen, daß die empfangene Ausgangssequenz AS einen einzigen Bitfehler (4. Bit) enthält und damit die binäre Zahlenfolge

$$AS = (000\underline{1}100101100111110001101110101) \qquad (G1\text{-}7)$$

aufweist. Die Kreuzkorrelationsfunktion $KKF_d$ weist bei Verwendung der der Testsequenz A entsprechenden Referenzsequenz R und bei Exklusiv-Nicht-Oder-Verknüpfung EXNOR und anschließender Quersummenbildung einen Extremwert EX (Maximum) von 30 (dezimal) bzw. 11110 (dual) auf. Um die Bitfehleranzahl BF in diesem Beispiel unmittelbar anzuzeigen, bedarf es einer Invertierung INV, bevor durch Angabe der drei niederwertigen Stellen "001" die Bitfehleranzahl BF dargestellt wird. Bei Verwendung der invertierten Testsequenz $\overline{A}$ als Referenzsequenz $\overline{R}$ ergibt sich unmittelbar ein Extremwert EX (Minimum) der dualen Kreuzkorrelationsfunktion KKF von 1 (dezimal) bzw. 00001 (dual), der direkt die Bitfehleranzahl BF darstellt (in Fig. 1 gestrichelt gezeichnet). Bei Verwendung einer $2^5$-m-Sequenz ergibt sich eine Fehlertoleranz von bis zu 7 Bitfehlern, so daß vorzugsweise die letzten drei niederwertigen Stellen des Extremwertes EX zur Darstellung der Bitfehleranzahl BF dienen.

Der Zusammenhang zwischen dezimalem bzw. dualem Extremwert EX der dualen Kreuzkorrelationsfunktion $KKF_d$ mit der Bitfehleranzahl BF ist in einer Tabelle in Figur 2 für weitere Beispiele dargestellt. Im oberen Tabellenteil stellen die niederwertigen Stellen der dualen Kreuzkorrelationsfunktion $KKF_d$ direkt die Bitfehleranzahl BF dar. Im unteren Teil der Tabelle ist dagegen wie vorstehend erläutert der duale Wert zumindest im Bereich der niederwertigen Stellen des Extremwertes EX der Kreuzkorrelationsfunktion $KKF_d$ vor der Angabe invertiert.

Figur 3 zeigt mögliche Kombinationen a bis h von verwendeten Testsequenzen A oder $\overline{A}$, Referenzsequenzen R oder $\overline{R}$ und der Verknüpfungsart und deren Auswirkung auf die Art des Extremwertes EX (maximale/minimale Quersumme Q) der dualen Kreuzkorrelationsfunktion $KKF_d$ und eine vorzugsweise vorzunehmende Invertierung. Auch bei der Beschreibung der Figur 3 wird von dem Vorliegen eines einzigen Bitfehlers BF ausgegangen. Gemäß Spalte a der Figur 3 sind Testsequenz A und Referenzsequenz R identisch; als Verknüpfung ist eine Exklusiv-Oder-Verknüpfung EXOR gewählt. Beim Auftreten eines Bitfehlers BF weist die gemäß (G1-5) zwischen Ausgangssequenz AS und Referenzsequenz R gebildete Kreuzkorrelationsfunktion $KKF_d$ einen durch Bildung der Quersumme Q ermittelten unteren Extremwert EX (Minimum) von 1 auf. Dieser wird unmittelbar durch Ausgabe der niederwertigen Stellen des Extremwertes EX (Quersumme Q) zur Angabe gebracht.

Demgegenüber besteht gemäß Spalte b die Referenzsequenz $\overline{R}$ aus der invertierten verwendeten Testsequenz A, so daß bei Exklusiv-Oder-Verknüpfung EXOR die Quersumme Q der um 1 verminderten maximal möglichen Quersumme MAX entspricht. Bei Verwendung einer $2^5$-m-sequenz ist gemäß (GI-l) und (G1-5) die maximale Quersumme MAX = 31; die tatsächliche Quersumme Q beträgt in diesem Fall

$$Q = MAX - 1 = 30. \qquad (G1\text{-}8)$$

Nach Invertierung INV (vgl. in Figur 1) werden die invertierten niederwertigen Stellen des Extremwertes EX (Maximum) - d. h. die invertierte Quersumme $\overline{Q}$ zur unmittelbaren Angabe der Bitfehleranzahl verwendet. Entsprechend umgekehrt sind die Verhältnisse bei Verwendung einer Exklusiv-Nicht-Oder-Verknüpfung EXNOR wie die Spalten c und d der Figur 3 zeigen.

Wird zusätzlich zu der Testsequenz A auch eine Invers-Testsequenz $\overline{A}$ zur Erhöhung des Vorrates an Testsequenzen verwendet, ist gemäß den Spalten e bis h der Figur 3 das Verhältnis jeweils in bezug auf die Spalten a bis d entsprechend umgekehrt. Werden sowohl die Testsequenz A als auch die Invers-Testsequenz $\overline{A}$ während der Untersuchung einer Daten- Übertragungsstrecke DS verwendet, so kann - wie nachfolgend erläutert - je nach Konfiguration in bezug auf die verwendete Referenzsequenz und die Verknüpfung die Art (Maximum oder Minimum) des Extremwertes EX dazu benutzt werden, bedarfsweise zumindest die niederwertigen Stellen des Extremwertes EX vor der Angabe zu invertieren.

Figur 4 zeigt eine Vorrichtung zur Durchführung der erfindungsgemäßen Verfahrens, bei der ein Sender SE sowohl die Testsequenz A als auch die invertierte Testsequenz $\overline{A}$ in eine zu untersuchende Datenübertragungsstecke DS sendet. Ein ausgangsseitig angeordneter Empfänger EM empfängt daraufhin die Ausgangsequenz AS und führt diese einem Korrelator K zu. Der Korrelator K wird ferner von einem Speicher RS mit einer Referenzsequenz R eingangsseitig beaufschlagt, die der Testsequenz A entspricht. Der Korrelator K führt zyklisch bitweise über die Länge der Ausgangssequenz AS eine Kreuzkorrelation mit der Referenzsequenz R aus. Dies erfolgt jeweils durch Exklusiv- Nicht-Oder-Verknüpfung EXNOR und anschließender Bildung der Quersumme Q. Liegt die jeweils gebildete Quersumme Q innerhalb einem von einem unteren Schwellwert US = 8 und einem oberen Schwellwert OS = 23 gebildeten Wertebereich, wird nach relativer bitweiser Verschiebung zwischen Ausgangssequenz AS und Referenzsequenz R die nächste Exklusiv-Nicht-Oder-Verknüpfung EXNOR mit anschließender Quersummenbildung vorgenommen.

Wenn die Quersumme Q den oberen Schwellwert OS überschreitet, wird ein Schalter S in eine Schalterstellung S1 gebracht, die die Quersumme Q direkt an eine Anzeige AZ oder eine Weiterverarbeitungseinrichtung z. B. in Form eines Speichers weitergibt. Die Anzeige AZ zeigt zumindest die drei niederwertigen Stellen der Quersumme Q und damit unmittelbar die Bitfehleranzahl BF an.

Unterschreitet die Quersumme Q den unteren Schwellenwert US, wird der Schalter S in eine Schalterstellung S2 gebracht, bei der die Quersumme Q über einen Inverter INV invertiert der Anzeige AZ zugeführt wird.

Hat nach zyklischer Abtastung der gesamten Ausgangssequenz AS die Quersumme Q weder den unteren Schwellenwert US noch den oberen Schwellenwert OS überschritten, wird der Schalter S in eine Schalterstellung S3 gebracht, über die der Wert 8 der Anzeige AZ zugeführt wird. Anstelle des Wertes 8 kann auch ein Signal ausgegeben werden, das eine Überschreitung der Bitfehleranzahl BF im gewählten Beispiel von 7 anzeigt.

Aus Figur 3 wird deutlich, daß bei Verwendung der invertierten Testsequenz $\bar{A}$ als Referenzsequenz $\bar{R}$ oder bei Verwendung der Exklusiv-Oder-Verknüpfung EXOR der Inverter INV in den Leitungszweig für die Schalterstellung S1 zu bringen ist, während in der Schalterstellung S2 eine direkte Angabe der Quersumme Q erfolgen würde.

Mit dem erfindungsgemäßen Verfahren bzw. der erfindungsgemäßen Vorrichtung läßt sich zwischen einer Ausgangssequenz AS und einer Referenzsequenz R eine duale Kreuzkorrelationsfunktion $KKF_d$ äußerst einfach und sehr schnell bilden und auswerten. Das erfindungsgemäße Verfahren eignet sich daher vorzüglich zur Untersuchung von digitalen Übertragungsstrecken in Echtzeit.

## Patentansprüche

**1.** Verfahren zum Ermitteln der Anzahl fehlerhaft über eine zu untersuchende Daten-Übertragungsstrecke übertragener digitaler Daten (Bitfehleranzahl BF), bei dem streckeneingangsseitig eine aus digitalen Daten (Bits) bestehende Testsequenz (A) gesendet wird, bei dem eine daraufhin streckenausgangsseitig empfangene Ausgangssequenz (AS) mit einem der Testsequenz (A) oder der invertierten Testsequenz ($\bar{A}$) entsprechenden Referenzsequenz (R;$\bar{R}$) kreuzkorreliert wird und bei dem durch Auswertung des Extremwertes (EX) der so gebildeten Kreuzkorrelationsfunktion (KKF) die Bitfehleranzahl (BF) bestimmt wird,
**dadurch gekennzeichnet**, daß die Ausgangssequenz (AS) mit der Referenzsequenz (R) durch jeweilige Exklusiv-Oder-Verknüpfung (EXOR) mit anschließender Quersummenbildung unter Bildung einer dualen Kreuzkorrelationsfunktion ($KKF_d(n)$) gemäß der Vorschrift:

$$KKF_d(n) = \sum_{m=0}^{N-1} f(m) \oplus h(n+m)$$

wobei
$0 \le n \le N-1$

| | |
|---|---|
| mit: $\oplus$ : | Exklusiv-Oder-Verknüpfung |
| f(m): | Referenzsequenz R; $\bar{R}$ |
| h(n+m): | Ausgangssequenz AS |
| N: | Anzahl der Bits in der Testsequenz A |
| n: | Anzahl der Bitstellen, um die die Ausgangssequenz relativ zur ursprünglichen Ausgangssequenz verschoben ist |

kreuzkorreliert wird und daß die Bitfehleranzahl (BF) unmittelbar durch Angabe der niederwertigen Stellen des Extremwertes (EX) der dualen Kreuzkorrelationsfunktion (KKF) angegeben wird.

**2.** Verfahren nach Anspruch 1,
**dadurch gekennzeichnet**, daß
die Exklusiv-Oder-Verküpfung (EXOR) bei der Bildung der dualen Kreuzkorrelationsfunktion ($KKF_d$) invers als Exklusiv-Nicht- Oder-Verknüpfung (EXNOR) ausgeführt wird und daß bei Verwendung der Testsequenz (A) als Referenzsequenz (R) die niederwertigen Stellen des invertierten Extremwertes (EX) zur Angabe der Bitfehleranzahl benutzt werden, während bei Verwendung der invertierten Testssequenz ($\bar{A}$) als Referenzsequenz ($\bar{R}$) die niederwertigen Stellen des Extremwertes (EX) zur direkten Angabe der Bitfehleranzahl (BF) benutzt werden.

**3.** Verfahren nach Anspruch 1 oder 2,
**dadurch gekennzeichnet**, daß
als Testsequenz eine $2^n$-m-Sequenz, ein Barker-Code, eine Gordon-Mills-Welch (GMW)-Sequenz oder ein Gold-Code verwendet wird.

4. Verfahren nach einem der vorangehenden Ansprüche, **dadurch gekennzeichnet**, daß streckeneingangsseitig neben der Testsequenz (A) zusätzlich eine Invers-Testsequenz ($\bar{A}$) gesendet wird, die durch Invertierung der Testsequenz (A) gebildet wird, und daß zusätzlich auch die relative Art (Maximum; Minimum) des Extremwertes (EX) der dualen Kreuzkorrelationsfunktion ($KKF_d$) ausgewertet wird.

5. Vorrichtung zur Durchführung des Verfahrens nach einem der Ansprüche 1 bis 4 mit einem Sender (SE) zur Ausgabe einer Testsequenz (A) aus digitalen Daten oder einer durch Invertierung der digitalen Daten gebildeten Invers-Testsequenz ($\bar{A}$) in eine zu untersuchende Daten-Übertragungsstrecke (DS), mit einem Empfänger (EM) zum streckenausgangsseitigen Empfang einer Ausgangssequenz (AS) und mit einem Korrelator (K), der zur Bildung einer Kreuzkorrelationsfunktion (KKF) eingangsseitig mit der Ausgangssequenz (AS) und mit einer Referenzsequenz (R) beaufschlagt ist, **dadurch gekennzeichnet**, daß der Korrelator (K) eine Exklusiv-Oder- (EXOR) oder eine Exklusiv-Nicht-Oder-Verknüpfungsschaltung (EXNOR) enthält, der ein Summierer zur Quersummenbildung nachgeordnet ist, daß ein Vergleicher die Quersumme (Q) mit einem oberen (OS) und einem unteren Schwellwert (US) vergleicht, wobei die Schwellwerte (OS, US) in vorgegebenen Abständen zu testsequenztypischen Wertebereichsgrenzen eingestellt sind, und daß eine Auswahlschaltung (S) in Abhängigkeit einer festgestellten Schwellwertüberschreitung zumindest die niederwertigen Stellen der zugeführten Quersumme (Q) einer Weiterverarbeitungseinrichtung oder einer Anzeige (AZ) zuführt.

## Claims

1. Method for ascertaining the number of items of digital data which are transmitted erroneously by way of a data transmission link which is to be examined (number of bit errors BF), wherein a test sequence (A) consisting of digital data (bits) is transmitted on the link-input side, wherein an output sequence (AS), which is received thereupon on the link-output side, is cross-correlated with a reference sequence (R; $\bar{R}$), which corresponds to the test sequence (A) or the inverted test sequence ($\bar{A}$), and wherein by means of evaluation of the extreme value (EX) of the cross-correlation function (KKF) thus formed the number of bit errors (BF) is determined, characterised in that the output sequence (AS) is cross-correlated with the reference sequence (R) by means of a respective exclusive-OR operation (EXOR) with subsequent cross-summation whilst forming a dual cross-correlation function ($KKF_d$ (n)) in accordance with the standard specification:

$$KKF_d(n) = \sum_{m=0}^{N-1} f(m) \oplus h(n+m) \quad .$$

where
$O \leq n \leq N-1$

with: $\oplus$ : exclusive-OR operation
f(m): reference sequence R; $\bar{R}$
h(n+m): output sequence AS
N: number of the bits in the test sequence A
n: number of the bit positions by which the output sequence is shifted relative to the original output sequence,

and in that the number of bit errors (BF) is indicated immediately by means of indication of the low-order positions of the extreme value (EX) of the dual cross-correlation function (KKF).

2. Method according to claim 1, characterised in that the exclusive-OR operation (EXOR) is executed inversely as an exclusive-NOR operation (EXNOR) when the dual cross-correlation function ($KKF_d$) is formed and in that when the test sequence (A) is used as the reference sequence (R), the low-order positions of the inverted extreme value (EX) are used to indicate the number of bit errors, whilst when the inverted test sequence ($\bar{A}$) is used as the reference sequence ($\bar{R}$) the low-order positions of the extreme value (EX) are used to indicate the number of bit errors (BF) directly.

3. Method according to claim 1 or 2, characterised in that a $2^n$-m-sequence, a Barker-code, a Gordon-Mills-Welch (GMW)-sequence or a Gold-Code is used as the test sequence.

4. Method according to one of the preceding claims, characterised in that on the link-input side besides the test sequence (A) there is additionally transmitted an inverse test sequence ($\bar{A}$) which is formed by inversion of the test sequence (A), and in that in addition the relative type (maximum; minimum) of the extreme value (EX) of the dual cross-correlation function ($KKF_d$) is also evaluated.

5. Arrangement for carrying out the method according to one of the claims 1 to 4, having a transmitter (SE) to output a test sequence (A) of digital data or an inverse test sequence ($\bar{A}$), which is formed by inversion of the digital data, to a data transmission link (DS) which is to be examined, having a receiver (EM) for reception of an output sequence (AS) on the link-output side and having a correlator (K) to which on the input side the output sequence (AS) and a reference sequence (R) are applied in order to form a cross-correlation function (KKF), characterised in that the correlator (K) contains an exclusive-OR logic circuit (EXOR) or an exclusive-NOR logic circuit (EXNOR), downstream of which an adder is arranged for cross-summation, in that a comparator compares the cross-sum (Q) with an upper threshold value (OS) and a lower threshold value (US), in which case the threshold values (OS, US) are set at given intervals with respect to value-range limits which are typical of the test sequence, and in that a selection circuit arrangement (S), as a function of an instance in which it is established that a threshold value has been exceeded, supplies at least the low-order positions of the supplied cross-sum (Q) to a further-processing device or to a display (AZ).

**Revendications**

1. Procédé de détermination du nombre de données numériques (nombre BF d'erreurs de bit) transmises avec une erreur par l'intermédiaire d'une voie de transmission de données à examiner, dans lequel on émet du côté entrée de la voie une séquence (A) d'essai constituée de données numériques (bits), dans lequel on effectue une intercorrélation d'une séquence (AS) de sortie reçue ensuite du côté sortie de la voie par une séquence (R;$\bar{R}$) de référence correspondant à la séquence (A) d'essai ou à la séquence ($\bar{A}$) d'essais inversée et dans lequel on détermine par exploitation de la valeur (EX) extrèmale de la fonction (KKF) d'intercorrélation ainsi formée le nombre (BF) d'erreurs de bit,
caractérisé en ce que
on effectue l'intercorrélation de la séquence (AS) de sortie avec la séquence (R) de référence par combinaison (EXOR) ou-exclusif puis formation de la somme des chiffres en formant une fonction ($KKF_d(n)$) duale d'intercorrélation suivant la formule :

$$KKFd(n) = \sum_{m=0}^{N-1} f(m) \oplus h(n+m)$$

ou
$0 \leq n \leq N-1$

avec: $\oplus$ : combinaison ou-exclusif
f(m) : séquence de référence R; $\bar{R}$
h(n+m) : séquence AS de sortie
N : nombre des bits dans la séquence A de test
n : nombre des positions de bits, de laquelle la séquence de sortie est

décalée par rapport à la séquence de sortie initiale, et on indique le nombre (BF) d'erreurs de bit directement en indiquant les positions de poids le plus faible de la valeur (EX) extrémale de la fonction (KKF) d'intercorrélation duale.

2. Procédé suivant la revendication 1,
caractérisé en ce que
on met en oeuvre la combinaison (EXOR) ou-exclusif lors de la formation de la fonction ($KKF_d$) d'intercorrélation duale de manière inverse de la combinaison (EXNOR) non ou-exclusif et on utilise, lors de l'utilisation de la séquence (A) d'essai comme séquence (R) de référence, les positions de poids les plus faibles, de la valeur (EX) extrémale inversée pour limiter le nombre d'erreurs de bit, tandis que l'on utilise, en cas d'utilisation de la séquence

($\bar{A}$) d'essai inversée comme séquence (R) de référence, les positions de poids les plus faibles de la valeur extrémale (EX) pour indiquer directement le nombre (BF) d'erreurs de bit.

**3.** Procédé suivant la revendication 1 ou 2,
caractérisé en ce que
on utilise en tant que séquence d'essai, une séquence $2^n$-m, un code de Barker, une séquence (GMW) de Gordon-Mills-Welch ou un code de Gold.

**4.** Procédé suivant l'une des revendications précédentes,
caractérisé en ce que
on émet du côté entrée de la voie, en plus de la séquence (A) d'essai, une séquence ($\bar{A}$) d'essai inverse que l'on forme par inversion de la séquence (A) d'essai et on exploite en plus également le genre relatif (Maximum; Minimum) de la valeur (EX) extrémale de la fonction ($KKF_d$) duale d'intercorrélation.

**5.** Dispositif pour la mise en oeuvre du procédé suivant l'une des revendications 1 à 4, comportant un émetteur (SE) pour l'émission d'une séquence (A) d'essai de données numériques ou une séquence ($\bar{A}$) d'essai inversée formée par inversion des données numériques dans une voie (DS) de transmission de données à examiner, comportant un récepteur (EM) destiné à la réception, du côté sortie de la voie, d'une séquence (AS) de sortie et un dispositif (K) de corrélation, auquel est appliqué, du côté entrée, pour la formation d'une fonction (KKF) d'intercorrélation, la séquence (AS) de sortie et une séquence (R) de référence,
caractérisé en ce que
le corrélateur (K) comprend un circuit (EXOR) de combinaison ou-exclusif ou un circuit (EXNOR) de combinaison non ou-exclusif, en aval duquel est disposé un dispositif de formation de la somme des chiffres, un comparateur compare la somme (Q) des chiffres à une valeur (OS) de seuil supérieur et à une valeur (US) de seuil inférieur, les valeurs (OS, US) de seuil étant réglées à intervalle prescrit, sur des limites de zone de valeur typique de séquence d'essai et un circuit (S) de sélection renvoie, en fonction de la constatation d'un dépassement d'une valeur de seuil, au moins les bits de poids faibles de la somme (Q) des chiffres renvoyés à un dispositif de retraitement ou à un affichage (AZ).

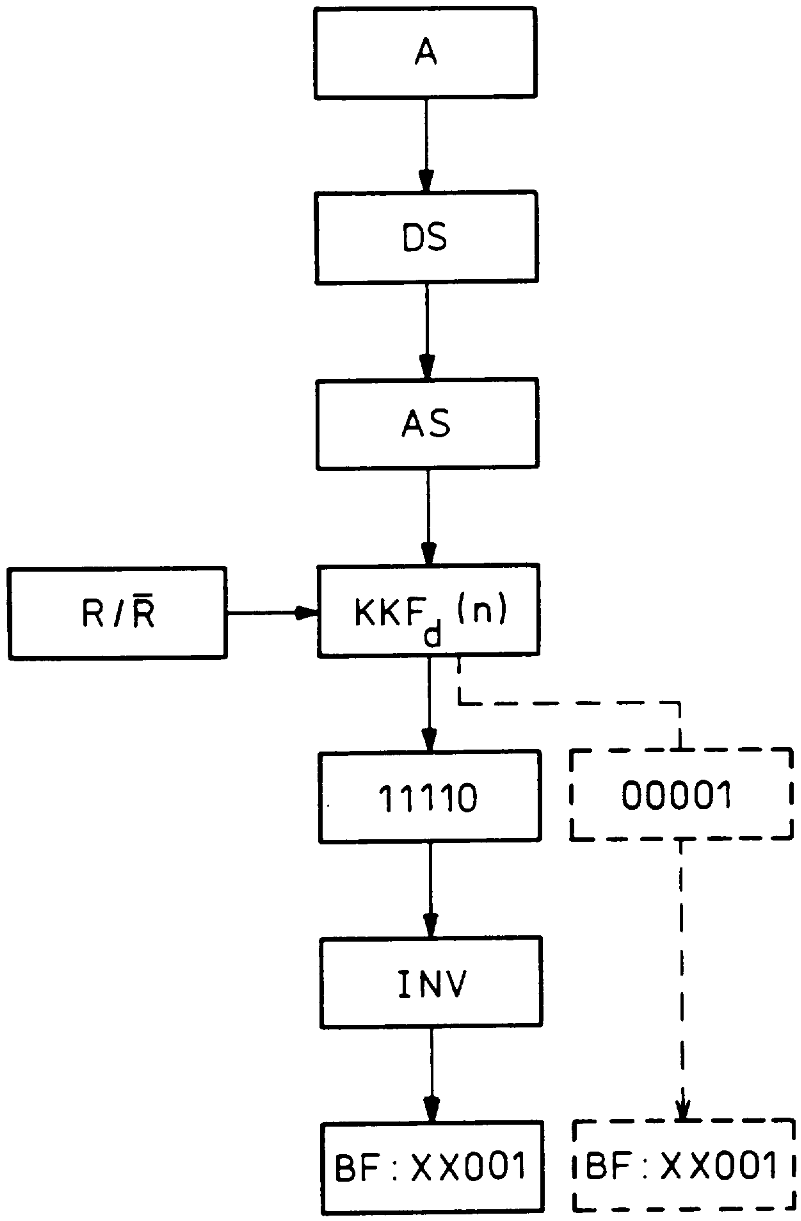


FIG 1

| dezimaler $KKF_d(n)$-Wert | dualer $KKF_d(n)$-Wert | invertierter dualer Wert | Anzahl der Bitfehler BF |
|---|---|---|---|
| 0 | 00000 = | | 0 |
| 1 | 00001 = | | 1 |
| 2 | 00010 = | | 2 |
| 3 | 00011 = | | 3 |
| 4 | 00100 = | | 4 |
| . | | | |
| . | | | |
| . | | | |
| **27** | **11011** | **00100 =** | **4** |
| **28** | **11100** | **00011 =** | **3** |
| **29** | **11101** | **00010 =** | **2** |
| **30** | **11110** | **00001 =** | **1** |
| **31** | **11111** | **00000 =** | **0** |

FIG 2

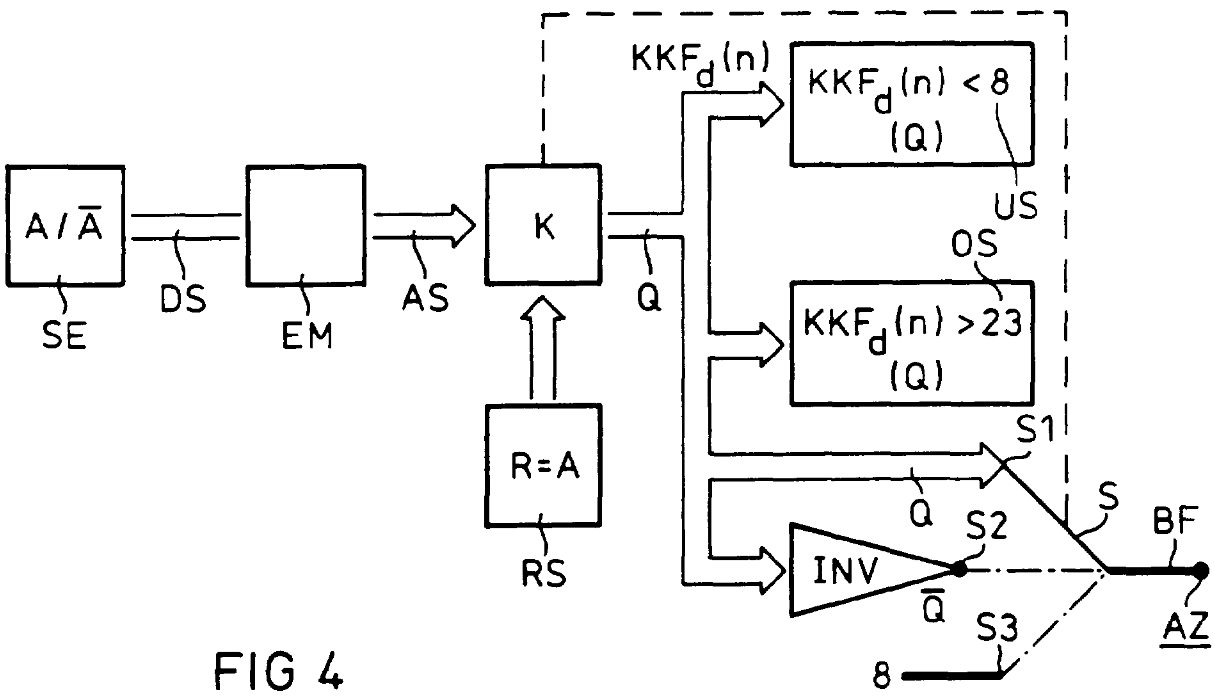


FIG 4

| | a | b | c | d | e | f | g | h |
|---|---|---|---|---|---|---|---|---|
| Testsequenz | A | A | A | A | $\overline{A}$ | $\overline{A}$ | $\overline{A}$ | $\overline{A}$ |
| Referenzsequenz | R(A) | $\overline{R}(\overline{A})$ | R(A) | $\overline{R}(\overline{A})$ | R(A) | $\overline{R}(\overline{A})$ | R(A) | $\overline{R}(\overline{A})$ |
| Verknüpfung | EXOR | EXOR | EXNOR | EXNOR | EXOR | EXOR | EXNOR | EXNOR |
| Extremwert/ maximale/minimale Quersumme Q bei einem Bitfehler | 1 | MAX-1 | MAX-1 | 1 | MAX-1 | 1 | 1 | MAX-1 |
| Invertierung | / | JA | JA | / | JA | / | / | JA |
| Anzeige (niederwertige Stellen des Extremwertes) | Q | $\overline{Q}$ | $\overline{Q}$ | Q | $\overline{Q}$ | Q | Q | $\overline{Q}$ |

FIG 3